# EUROPÄISCHE PATENTANMELDUNG

(11) **EP 1 609 646 A2**
(43) Veröffentlichungstag der Anmeldung: **28.12.2005**
(21) Anmeldenummer: 05012704.2
(22) Anmeldetag: 14.06.2005
(51) Int. Cl.: B60J 1/20

(54) **Rollo mit konischer Wickelwelle**

(30) Priorität: 23.06.2004 DE 102004030262
(71) Anmelder: BOS GmbH & Co. KG, 73760 Ostfildern (DE)
(72) Erfinder: Ganser, Wilhelm Konrad, 88353 Kißlegg (DE); Schlecht, Werner, 71665 Vaihingen/Enz (DE)
(74) Vertreter: Rüger, Barthelt & Abel Patentanwälte

(57) **Zusammenfassung**

Ein Fensterrollo (11) für Kraftfahrzeuge weist eine Rollobahn (22) auf, die trapezförmig zugeschnitten ist, um optimal an die Gestalt des betreffenden Fensters (11) angepasst zu sein. Die Wickelwelle (31) für diese Rollobahn (22) ist ein angenäherter Kegelstumpf, der mit Hilfe eines zylindrischen Kerns (35) und darauf aufgebrachten Wickeln (38) angenähert ist.

## Beschreibung

PKW verfügen in der Regel in dem hinteren Karosseriebereich über weitere Seitenfenster. Diese Seitenfenster können entweder unmittelbar in der Karosserie angebracht sein oder sie sind Bestandteil von hinteren Seitentüren. Soweit es sich um Fenster in Seitentüren handelt, sind diese nochmals unterteilt, und zwar in einen angenäherten trapezförmigen Teil und einen dreieckförmigen Teil. Der trapezförmige Teil ergibt sich aus dem Umstand, dass die Seitenscheibe in diesem Bereich absenkbar ist, um das Fenster öffnen zu können. Die obere Kante des Seitenfensters setzt sich in aller Regel aus einem im Wesentlichen geraden Abschnitt und einem gekrümmten Abschnitt zusammen, um einen Sprung in den dreickförmigen Bereich zu vermeiden. Allerdings kann die Oberkante des viereckigen Teils in erster Näherung als gerade angesehen werden. Zufolge der Karosserieform ist jedoch der Verlauf dieses Abschnittes nicht parallel zu der Unterkante. Bei heruntergelassener Seitenscheibe hat dies zur Folge, dass die Oberkante der Scheibe im vorderen Ende des Fensterschlitzes noch sichtbar ist, während sie im hinteren Teil deutlich nach unten wegtaucht.

Dieser Umstand ist bei Fensterscheiben hinnehmbar. Wenn das Seitenfenster jedoch durch ein Rollo abgeschattet werden soll, entsteht hier ein Problem, denn es ist unerwünscht, dass die Oberkante des Seitenfensterrollos entweder über die Unterkante des Fensters übersteht oder einen großen Spalt frei lässt, in den Gegenstände hineinfallen können. Dies ist deswegen von wesentlicher Bedeutung, weil im hinteren Bereich von PKWs häufig auch Kinder sitzen und die Gefahr groß ist, dass durch die Spalte irgendwelche Teile ins Innere der Tür fallen.

Es besteht deswegen ein erhöhter Bedarf dafür, bei Seitenfensterrollos im hinteren Bereich dafür zu sorgen, dass die Oberkante der Rollobahn den Auszugsschlitz vollständig schließt.

Diese Bedingung könnte theoretisch erfüllt werden, indem die Rollowelle unterhalb der unteren Fensterkante so angeordnet wird, dass sie zu der Oberkante des Fensters parallel verläuft. Einer solchen Anordnung stehen im Allgemeinen jedoch die Platzverhältnisse im Inneren einer Tür entgegen. Der Konstrukteur ist gezwungen die Rollowelle parallel zur Unterkante unterzubringen. Diese Anordnung bedingt im zum Vorderende des Fahrzeugs hin gelegene Bereich eine längere vertikale Ausdehnung der Rollobahn als im zum Heck gelegene Bereich. Beim Aufwickeln muss deswegen im Bereich der Vorderkante der Rollobahn mehr Material aufgewickelt werden als im Bereich der Hinterkante.

Es ist hierzu aus der EP 0 111 270 bekannt eine konische Wickelwelle zu simulieren. Die Wickelwelle ist ansich strikt zylindrisch, wobei die gewünschte Konizität erreicht wird, indem die Rollobahn, die an der Wickelwelle befestigt ist, einen dreieckförmigen Fortsatz aufweist. Der dreieckförmige Fortsatz ist einstückig mit dem von der Wickelwelle abwickelbaren Abschnitt. Dieser Fortsatz wird begrenzt von einer Trennlinie, die zu der Wickelwelle parallel ist und den Fortsatz von den abwickelbaren Teil abgrenzt. Weiterhin wird der Fortsatz von zwei Seitenkanten begrenzt, die jeweils von der Trennlinie ausgehen, so dass gedanklich ein rechtwinkliges Dreieck entsteht, dessen eine Kathete die Trennlinie ist.

Diese Anordnung ist jedoch auf solche Anwendungen begrenzt, bei denen die Länge der kurzen Seitenkante, die in Verlängerung der vorderen Seitenkante der Rollobahn verläuft und somit die andere Kathete des Dreiecks bildet, eine Länge hat, die kleiner ist als der Umfang der Wickelwelle. Andernfalls würde sich beim Aufwickeln während der Herstellung die Spitze in unkontrollierbarer Weise umschlagen.

Im Übrigen ist dieser Rollobahnzuschnitt während der Montage nicht einfach zu handhaben, da der Reproduzierbarkeit Grenzen gesetzt sind.

Es ist zu bedenken, dass die Wickelwelle beim Aufwickeln des dreieckigen Ausgleichsabschnitts sich letztendlich längs eines Kreisbogens bewegt, wobei der Radius des Kreisbogens durch die Lage des Ausgleichsabschnittes und der Spitze dieses Ausgleichsabschnittes festgelegt ist. Die mangelnde Steifigkeit des Materials für die Rollobahn verkompliziert die Verhältnisse zusätzlich.

Eine weitere Lösung ist aus der FR 2 750 158 bekannt. Hier wird die konische Gestalt der Wickelwelle erzeugt, indem ausgehend von einem zylindrischen Kernelement ein dreieckförmiger Flicken aufgewickelt wird. Das Aufwickeln beginnt an der langen Kathete des Zuschnitts.

Diese Anordnung ist zwar hinsichtlich der Reproduzierbarkeit etwas günstiger, erfordert aber die Handhabung von zwei getrennten Zuschnitten.

Ausgehend hiervon, ist es Aufgabe der Erfindung ein Fensterrollo für Kraftfahrzeuge zu schaffen, das leichter herstellbar ist.

Diese Aufgabe wird erfindungsgemäß durch ein Fensterrollo mit den Merkmalen der Ansprüche 1, 2 oder 3 gelöst.

Sämtliche Lösungen eignen sich für kleine Serien, bei denen sich Werkzeugkosten zum Spritzen von konischen Wickelwellen nicht rentieren.

Bei sämtlichen Lösungen besteht der Kern der Wickelwelle aus einem zylindrischen Rohr, vorzugsweise einem Stahlrohr. Auf dieses Stahlrohr sind ein oder mehrere Wickel aus Bändern aufgebracht. Bei der einen Lösung befinden sich auf dem rohrförmigen Kern nebeneinander mehrere zylindrische Wickel, deren Außendurchmesser von Wickel zu Wickel von einem Ende zum anderen Ende der Wickelwelle hin zunimmt bzw. vom anderen Ende her gesehen abnimmt. Der Wickel mit dem größten Durchmesser befindet sich unmittelbar neben einem Ende.

Je nachdem, wie stark die Konizität ist und wie groß die Länge der Wickelwelle ist, können die einzelnen Wickel eine axiale Erstreckung zwischen 10% bis 30% der Länge der Wickelwelle ausmachen. Die Spitze des gedachten Konus wird von dem unbewickelten Kern unmittelbar gebildet.

Die Stufen, die dadurch entstehen, sind so gering, dass sie beim Wickeln keine Fehler erzeugen.

Um Material zu sparen ist es auch möglich, die Wickel voneinander zu beabstanden.

Eine mit der erstgenannten Lösung recht ähnliche Lösung besteht in dem Aufbringen von zylindrischen Wickeln, und zwar lagenweise. Der erste Wickel befindet sich unmittelbar auf der Wickelwelle und hat in axialer Richtung derselben die größte Erstreckung. Der nächste Wickel ist auf diesen durchgehenden ersten Wickel aufgebracht und hat eine geringere Erstreckung in axialer Richtung. Beide Wickel enden gemeinsam an demselben Ende der Wickelwelle. Jeder weitere Wickel, der auf den jeweils darunter befindlichen Wickel aufgewickelt ist, ist etwas kürzer, wodurch schlussendlich an einem Ende der Wickelwelle eine entsprechende Zahl von Wickeln übereinander liegt und die Zahl der Wickel um 1 kleiner ist als die längs der Wickelwelle erzeugten Stufen.

Auch hierbei wird der kleinste Durchmesser des angenäherten Kegelstumpfes durch den Kern unmittelbar gebildet.

Die dritte Variante sieht die Verwendung eines einzelnen durchgehenden Bandes vor. Die Gewindesteigung des aufgewickelten Bands ist so gewählt, dass sich die einzelnen Lagen überlappen. Je stärker und ausgeprägter die Überlappung ist, umso größer ist der erzeugte Durchmesser. Um hiermit die kegelstumpfförmige Gestalt zu erhalten, wird das Band mit variabler Steigung aufgewickelt. Dort, wo der größte Durchmesser des gewünschten Kegels erzeugt werden soll, liegen die einzelnen Lagen nahezu deckungsgleich übereinander. Hingegen liegen sie an dem Ende mit dem kleinsten Durchmesser nebeneinander.

Im Übrigen sind Weiterbildungen der Erfindung Gegenstand von Unteransprüchen.

Beim Studium der Figurenbeschreibung wird klar, dass eine Reihe von Abwandlungen möglich sind, die sich aus den jeweiligen Umständen ergeben.

In der Zeichnung sind Ausführungsbeispiele des Gegenstandes der Erfindung dargestellt. Es zeigen:
- Fig. 1: den aufgeschnittenen Fondbereich eines Kraftfahrzeugs mit Blick auf die rechte hintere Seitentür,
- Fig. 2: die Rollobahn für das Seitenfensterrollo nach Fig. 1, in einer Draufsicht,
- Fig. 3: ein erstes Ausführungsbeispiel der konischen Wickelwelle des Seitenfensterrollos nach Fig. 1, unter Verwendung nebeneinander angeordneter Wickel,
- Fig. 4: ein zweites Ausführungsbeispiel der konischen Wickelwelle für das Seitenfensterrollo nach Fig. 1, unter Verwendung von aufeinander liegenden Wickeln, und
- Fig. 5: ein drittes Ausführungsbeispiel für eine konische Wickelwelle für das Seitenfensterrollo nach Fig. 1, unter Verwendung eines einzigen Wickels mit variabler Steigung.

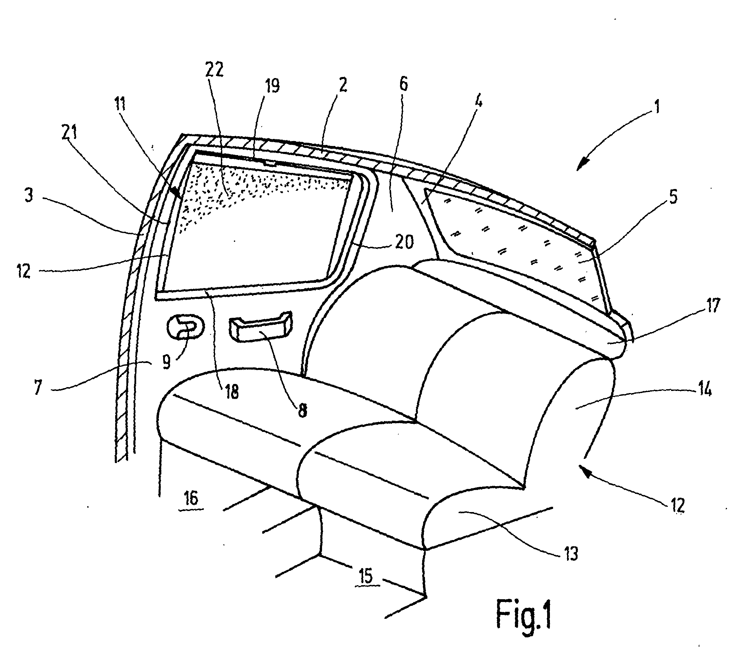

Figur 1 stellt den aufgebrochenen abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, insofern als bspw. Innenstrukturen der Karosserie wie Versteifungen, Befestigungsmittel nicht gezeigt sind, da ihre Darstellung für das Verständnis der Erfindung nicht erforderlich ist. Im Übrigen werden die Begriffe "rechts", "links", "vorne", "hinten" in der Weise verwendet, wie es in der Automobiltechnik üblich ist.

Der veranschaulichte Karosserieabschnitt 1 weist ein Dach 2 auf, von dem seitlich eine B-Säule 3 zu einer nicht veranschaulichten Bodengruppe führt. Eine entsprechende B-Säule wäre auf der linken weggebrochenen Seite des Fahrzeugs zu denken. Das Dach 2 geht an seine Hinterkante in eine Heckklappe 4 über, die in der üblichen Weise an der Unterkante des Daches 2 anscharniert ist. In der Heckklappe 4 ist ein Heckfenster 5 untergebracht.

Die Heckklappe 4, bzw. die sie aufnehmende Öffnung, grenzt an eine C-Säule 6 an. Zwischen der C-Säule 6 und der B-Säule 3 befindet sich eine hintere rechte Seitentür 7, die wie bereits die obigen Erläuterung ergibt, eine spiegelbildliche Tür auf der anderen Fahrzeugseite hat.

Von der Tür 7 sind ein an der Innenseite befestigter Türgriff 8 sowie eine Öffnungsklinke 9 zu erkennen.

In der Tür 7 befindet sich am oberen Bereich ein Seitenfenster 11, in dem sich eine bewegliche Fensterscheibe 12 befindet, die in der üblichen Weise, bspw. elektrisch auf und ab zu bewegen ist, um das Fenster 11 zu öffnen. Zwischen den beiden hinteren seitlichen Türen 7 befindet sich eine Hecksitzgruppe 12 mit einer geteilten Sitzfläche 13 sowie einer zugehörigen ebenfalls geteilten Rücksitzlehne 14. Vor der Sitzfläche 13 befinden sich Fußräume 15 und 16 der Bodengruppe.

Der Spalt zwischen der Oberkante der Rücksitzlehne 14 und der Innenkontur der Heckklappe 4 wird durch eine Hutablage 17 verschlossen, die beim Öffnen der Heckklappe 4 in bekannter Weise mit nach oben geschwenkt wird. Unterhalb der Hutablage 17 und hinter der Rücksitzlehne 14 ist ein Kofferraum vorhanden.

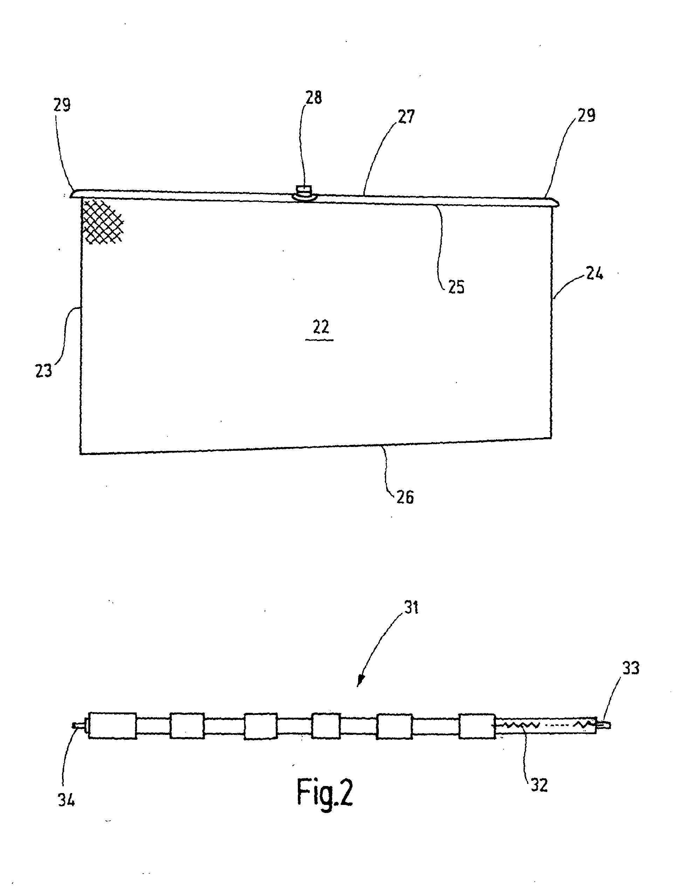

Das in der Seitentür 7 befindliche Fenster 11 wird von einer unteren geraden Kante 18 sowie einer weitgehend geraden oberen Kante 19 und zwei Seitenkanten 20 und 21 begrenzt. Die obere Kante 19 verläuft, wie gezeigt, unter einem spitzen Winkel zu der unteren Kante 18, d.h. der Abstand zwischen der oberen Kante und der unteren Kante 18 ist im Bereich der vorderen Seitenkante 21 größer als im Bereich der hinteren Seitenkante 20. Zwischen diesen Kanten 18, 19, 20, 21 des Fensters 11 kann eine Rollobahn 22, wie gezeigt, aufgespannt werden. Die Rollobahn 22 läuft durch einen Schlitz in der unteren Fensterlaibung. Die Rollobahn 22 gehört zu einem Seitenfensterrollo 23, dessen für das Verständnis der Erfindung wesentliche Teile in Figur 2 gezeigt sind. Bei dem Seitenfensterrollo 23 handelt es sich um ein manuell zu betätigendes Fensterrollo.

Die Rollobahn 22 ist trapezförmig zugeschnitten. Sie wird von einer ersten Seitenkante 23, einer dazu parallelen Seitenkante 24, einer Ober- oder Endkante 25 sowie einer Basiskante 26 begrenzt. Die Ober- oder Endkante 25 ist mit einem diese Kante aussteifenden Auszugsprofil 27 versehen, das etwa in der Mitte einen Haken 28 aufweist, der entweder mit der Oberkante der Fensterscheibe 12 des Fensters 11 zu verhaken ist, oder in eine spezielle Öse an der Innenseite der Seitentür 7 einzuhängen ist. Das Auszugsprofil 27 ist gerade und entspricht damit in seinem Verlauf angenähert der oberen Kante 19 des Seitenfensters 11, wenn die Rollobahn 22 ausgezogen ist. Die Rollobahn 22 stellt somit die trapezförmige Annäherung der Fläche des hinteren Seitenfensters 11 dar.

Das Auszugsprofil 27 steht mit seinen Enden 29 ein Stück weit über die Seitenkanten 23 und 24 über, um sich im eingefahrenen Zustand an den Rändern des Schlitzes aufzulegen, durch die die Rollobahn 22 aus dem Inneren der Tür 7 herauszuziehen ist.

Unterhalb der Rollobahn 22 ist in Fig. 2 eine zugehörige Wickelwelle 31 veranschaulicht, an der die Rollobahn 22 längs ihrer Basiskante 26, beispielsweise durch Kleben, befestigt ist. Die Wickelwelle 31 enthält einen Federmotor 32, der sich in der rohrförmigen Wickelwelle 31 befindet, und dort einends befestigt ist. Das andere Ende des Federmotors 32, der beispielsweise aus einer Schraubenfeder besteht, ist in einem Zapfen 33 drehfest verankert, der im montierten Zustand drehfest innerhalb der Tür d.h. zwischen der Türinnenverkleidung und der Türaußenhaut drehfest gehalten ist. Auf dem Zapfen 33 ist die Wickelwelle 31 drehbar gelagert.

Koaxial zu dem Zapfen 33 weist die Wickelwelle 31 einen zylindrischen Zapfen 34 auf, mit dessen Hilfe das andere Ende der Wickelwelle 31 drehbar gelagert ist.

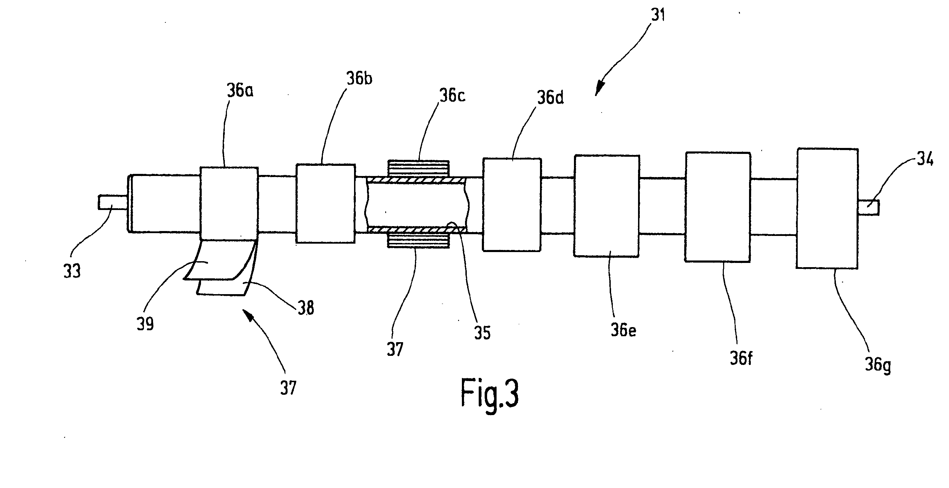

Der Aufbau der Wickelwelle 31 ist in Fig. 3 vergrößert und stark schematisiert gezeigt.

Zu der Wickelwelle 31 gehört ein zylindrisches Rohr 35, in dem der Federmotor 32 untergebracht ist.

Aus Platzgründen soll die Achse der geraden Wickelwelle 31 unmittelbar unterhalb und parallel zu der im Wesentlichen geraden Unterkante 18 verlaufen. Damit die Oberkante 25 der Rollobahn 22 parallel zur Fensteroberkante 19 verläuft, ist der bereits erläuterte trapezförmige Zuschnitt erforderlich. Um diesem trapezförmigen Zuschnitt so aufzuwickeln, dass am Schluss des Aufwickelvorgangs das Auszugsprofil 27 ebenfalls parallel zu der Fensterkante 18 verläuft, muss die Wickelwelle 31 eine zumindest angenähert kegelstumpfförmige Gestalt haben. Die Bemessungsvorschrift besagt, dass bei gleicher Anzahl Umdrehungen sowohl die kürzere Kante 24 als auch die längere Seitenkante 23 aufgewickelt sein müssen. Der Zusammenhang ist linear und führt zwangsläufig zu einer kegelstumpfförmigen Gestalt. Um diese angenähert zu erhalten, sind auf dem rohrförmigen Kern 35 nebeneinander mehrere Wickel 36a...36g angebracht. Jeder dieser Wickel 36a...36g besteht, wie der aufgeschnittene Bereich in der Umgebung des Wickels 36c veranschaulicht, aus mehreren Lagen eines aufgewickelten entsprechend breiten Bandes 37. Jeder Wickel 36 hat eine axiale Länge, entsprechend der Breite des verwendeten Bands 37. Bei dem Band 37 handelt es sich beispielsweise um ein auf einer Seite selbstklebend ausgerüstetes Textilband, wie es auch als Lenkerband bekannt ist. Es werden so viele Windungen aufgebracht, bis der gewünschte Durchmesser an der entsprechenden Stelle erreicht ist.

Um Material zu sparen sind die einzelnen Wickel, wie die Figur erkennen lässt, in axialer Richtung voneinander beabstandet, so dass entsprechende Lücken entstehen. Diese Lücken sind unschädlich, weil ohnehin der erforderliche theoretische Konus nur stufenweise durch die einzelnen Wickel 36 angenähert ist.

Das Band besteht aus einem textilen oder folienförmigen Träger 38 und einer Klebeschicht 39.

Die Darstellung in den Fig. 2 und 3 ist übertrieben, um das Wesentliche erkennen zu lassen. Tatsächlich variiert der Durchmesser bei einer praktischen Ausführungsform von dem Ende mit dem größeren Durchmesser zum Ende mit dem kleineren Durchmesser, um maximal 6 mm auf eine Länge von ca. 50 cm. Wie sich hieraus ergibt, ist der erforderliche Konus außerordentlich flach.

Bei der Herstellung wird die Rollobahn 22 lediglich auf den Wickeln 36 befestigt, nicht jedoch in den Zwischenräumen.

Eine weitere nicht gezeigte Möglichkeit besteht darin, die einzelnen Wickel 36 unmittelbar aneinander angrenzend aufzubringen.

Da die Wickel aus einem selbstklebenden Band bestehen, sind sie auch auf der Außenumfangsfläche des zylindrischen rohrförmigen Kerns 35 befestigt und können auf diese Weise das Drehmoment des Federmotors 32 auf die Rollobahn 22 übertragen. Der Wickelsinn der einzelnen Wickel 36 ist gleich und so gewählt, dass ein Zug an der Rollobahn 22 bestrebt ist, den betreffenden Wickel 36 zuzuziehen. Mit anderen Worten, der Wickelsinn der Wickel 36 ist derselbe Wickelsinn, wie ihn die Rollobahn 22 zeigt, wenn sie auf die Wickelwelle 31 aufgewickelt ist.

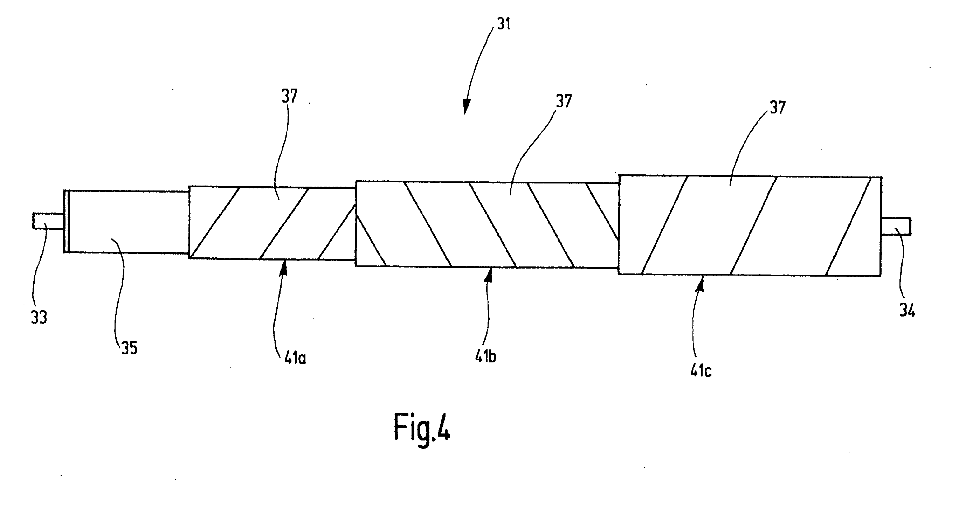

Bei der Ausführungsform nach Fig. 3 liegen die einzelnen Wickel 36 nebeneinander in axialer Richtung. Es ist jedoch auch möglich, die Wickel übereinander anzubringen, wie dies Fig. 4 erkennen lässt.

Zu der Wickelwelle 31 gehört wiederum ein zylindrischer rohrförmiger Kern 35, auf den ein erster Wickel 41a aufgebracht ist. Der Wickel 41a setzt sich wiederum aus einem Band 37 zusammen, dass jetzt, im Gegensatz zum spiraligen Wickel bei der Ausführungsform nach Fig. 3, schraubenförmig aufgebracht ist. Der Wickel 41a reicht von dem dem Zapfen 34 benachbarten Ende des Kerns 35 bis in die Nähe des Kerns 35, das dem drehfesten Zapfen 33 benachbart ist. Der Wickel 41a überdeckt ca. 75% der Länge des Kerns 35. Die einzelnen Windungen aus dem Band 37 liegen aneinander an. Sie überlappen einander nicht.

Ein weiterer, ebenfalls zylindrischer Wickel 41b, befindet sich auf der Außenumfangsfläche des Wickels 418a. Er beginnt an derselben Stelle am rechten Ende des Kerns 35, wie der Wickel 41a, hat jedoch eine axial kürzere Erstreckung, beispielsweise lediglich 50% der Gesamtlänge des Kerns 35. Auch er besteht aus einem schraubenförmig aufgewickelten Band 37. Lediglich zum Zweck der besseren Unterscheidung der Wickel ist ein geänderter Wickelsinn gezeigt. Bei der praktischen Ausführung jedoch ist klar, dass der Wickelsinn des Wickels 41b derselbe ist, wie der Wickelsinn des Wickels 41a.

Schließlich trägt der Kern 35 bei dem gezeigten Ausführungsbeispiel noch einen dritten Wickel 41c, der ebenfalls am rechten Ende des Kerns 35 beginnt und eine axiale Länge von etwa 25% der Länge des Kerns 35 aufweist. Mit Hilfe der drei Wickel 41a...41c und dem von Wickeln freien Teil des Kerns 35 wird stufenförmig wiederum ein Kegelstumpf angenähert. Die Bemessungsvorschrift für die kegelstumpfförmige Annäherung ist dieselbe, wie dies bereits im Zusammenhang mit Fig. 3 erläutert wurde.

Sämtlich Wickel 38 haben denselben Aufbau.

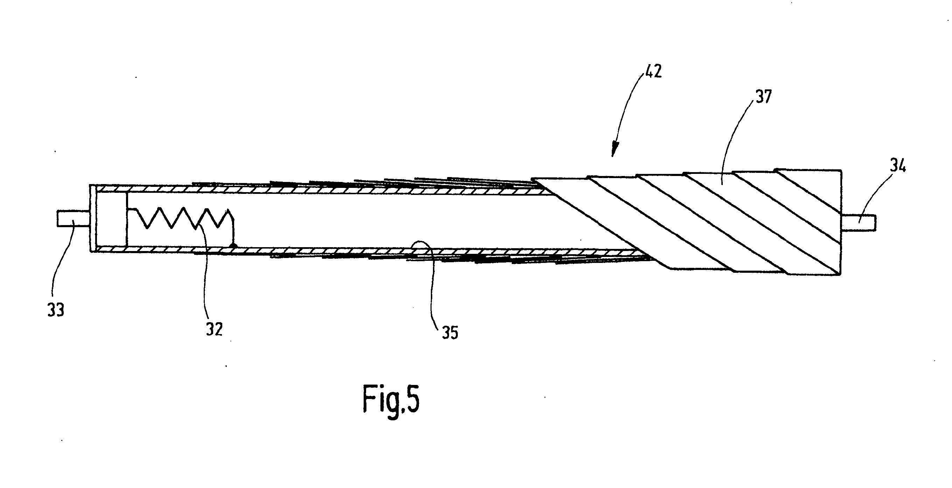

Fig. 5 zeigt schließlich eine Ausführungsform, bei der die konische Annäherung mit Hilfe eines einzigen Wickels 42 erzeugt wird. Der Wickel 42 besteht wiederum aus einem Band 37, das, wie zuvor, auf der dem Kern 35 zugekehrten Seite selbstklebend ausgerüstet ist. Der Wickel 42 beginnt beispielsweise in einem Abstand von ca. 25% der Gesamtlänge des Kerns 35 neben dem linken Ende. Von hier ausgehend ist das Band 37 schraubenförmig aufgewickelt. Während bei dem Ausführungsbeispiel nach Fig. 4 die Steigung entsprechend der Breite des Bandes 37 so gewählt wurde, dass die einzelnen Windungen in axialer Richtung exakt nebeneinander liegen, wird bei dem Wickel eine Steigung verwendet, bei der eine nachfolgende Windung des Bands 37, die vorausgehende Windung ein Stück weit überdeckt. Durch Variation der Steigung kann ein zunehmend größerer Wickeldurchmesser erzeugt werden.

Beispielsweise sei angenommen, dass im ersten Drittel des Wickels 42, wie zuvor erläutert, die einzelnen Windungen strickt nebeneinander liegen. Bei etwa der Hälfte der Länge des Kerns 35 ändert sich die Steigung des Wickels, beispielsweise um die Hälfte, d.h. aufeinander folgende Windungen überdecken sich um ca. 50% der Breite des Bandes 37. Damit kommt in jedem Bereich des so hergestellten Wickels eine Doppellage zustande. Ein solcher Wickel wird bis ca. 2/3tel der Länge des gesamten Wickels 39 erzeugt. Nach 2/3teln wird die Steigung beispielsweise auf 25% der Breite des Bandes 37 reduziert. Dies erzeugt eine Dreilagigkeit, d.h. ab diesem Bereich liegen jeweils 3 Lagen des Bandes 37 übereinander. Schlussendlich entsteht eine Struktur, die der Struktur nach Fig. 4 ähnlich ist.

Die letztgenannte Ausführungsform hat den wesentlichen Vorteil, dass in einer Maschine zum Aufwickeln des Bandes 37 auf den Kern 35 nur ein Band verarbeitetet werden muss, und es genügt, die Wicklungssteigung zu variieren. Es ist kein erneutes Ansetzen des Bandes 37 erforderlich, wie dies bei den Ausführungsformen nach den Fig. 3 und 4 erforderlich ist.

Die Ausführungsform nach Fig. 5 wurde oben anhand eines Beispiels mit sprunghaft sich ändernder Steigung erläutert, um das Wesentliche zu verstehen. Es leuchtet jedoch ohne weiteres ein, dass auch eine kontinuierliche Änderung der Steigung des Wickels erzeugt werden kann, wodurch sehr fein der Konus angepasst werden kann.

Wenn eine sehr starke Konizität erforderlich ist, kann auch die Wickeltechnik nach Fig. 5 mit der Wickeltechnik nach Fig. 4 kombiniert werden. Dies führt zu einer Wickelwelle, bei der jeder der Wickel 38 nach Fig. 4 nicht mehr zylindrisch sondern bereits in sich konisch ist.

Ein Fensterrollo für Kraftfahrzeuge weist eine Rollobahn auf, die trapezförmig zugeschnitten ist, um optimal an die Gestalt des betreffenden Fensters angepasst zu sein. Die Wickelwelle für diese Rollobahn ist ein angenäherter Kegelstumpf, der mit Hilfe eines zylindrischen Kerns und darauf aufgebrachten Wickeln angenähert ist.

## Patentansprüche

1. Fensterrollo (11) für Kraftfahrzeuge,
mit einer Wickelwelle (31), die einen Kern (35) mit einer zylindrischen Außenumfangsfläche aufweist,
mit einem ersten auf der Wickelwelle (31) drehfest angeordneten Wickel (36), der von einem Band (37) gebildet ist, das zur Erzeugung des ersten zylindrischen Wickels (37) spiralförmig auf den Kern (38) der Wickelwelle (31) aufgewickelt ist und der sich neben einem Ende des Kerns (35) befindet,
mit wenigstens einem weiteren auf der Wickelwelle (31) angeordneten Wickel (38), der von einem Band (37) gebildet ist, das zur Erzeugung des zylindrischen weiteren Wickels (38) spiralförmig auf den Kern (35) der Wickelwelle (31) aufgewickelt ist, der einen kleineren Außendurchmesser aufweist als der erste Wickel (38) und der sich zwischen dem ersten Wickel (38) und dem anderen Ende des Kern (35) befindet, derart, dass durch die beiden Wickel (38) und den von Wickeln (38) freien Teil des Kerns (35) stufenförmig ein Konus angenähert ist, und
mit einem Rollobahnzuschnitt, der eine von einem Rechteck abweichenden Gestalt aufweist und der mit einer Kante an der Außenumfangsfläche der wenigstens zwei Wickel und dem freien Teil des Kerns befestigt ist.

2. Fensterrollo (11) für Kraftfahrzeuge,
mit einer Wickelwelle (31), die einen Kern (35) mit einer zylindrischen Außenumfangsfläche aufweist,
mit einem ersten auf der Wickelwelle (31) drehfest angeordneten Wickel (41), der von einem Band (37) gebildet ist, das zur Erzeugung des ersten zylindrischen Wickels (41) schraubenförmig auf den Kern (35) der Wickelwelle (31) aufgewickelt ist und der neben einem Ende des Kerns (35) beginnt und sich ein Stück weit in Richtung auf das andere Ende erstreckt,
mit wenigstens einem weiteren Wickel (41), der von einem Band (37) gebildet ist, das zur Erzeugung des zylindrischen weiteren Wickels (41) schraubenförmig auf den ersten Wickel (41) aufgewickelt ist, und dessen Länge gemessen in Längsrichtung der Wickelwelle (31) kleiner ist als die Länge des ersten Wickels (41), derart, dass durch die beiden Wickel (41) und den von Wickeln (41) freien Teil des Kerns (35) stufenförmig ein Konus angenähert ist, und
mit einem Rollobahnzuschnitt, der eine von einem Rechteck abweichenden Gestalt aufweist und der mit einer Kante an der Außenumfangsfläche der wenigstens zwei Wickel und dem freien Teil des Kerns befestigt ist.

3. Fensterrollo (11) für Kraftfahrzeuge,
mit einer Wickelwelle (31), die einen Kern (42) mit einer zylindrischen Außenumfangsfläche aufweist,
mit einem auf der Wickelwelle (31) drehfest angeordneten Wickel (42), der von einem Band (37) gebildet ist, das zur Erzeugung des Wickels (42) schraubenförmig auf den Kern (35) der Wickelwelle (31) aufgewickelt ist, wobei sich die Steigung des Wickels (42) in Richtung auf das eine Ende des Kerns (35) kontinuierlich oder sprunghaft verringert, derart, dass durch den Wickel (42) ein Konus angenähert ist, und
mit einem Rollobahnzuschnitt, der eine von einem Rechteck abweichenden Gestalt aufweist und der mit einer Kante an der Außenumfangsfläche der wenigstens zwei Wickel und dem freien Teil des Kerns befestigt ist.

4. Fensterrollo nach einem der Ansprüche 1, 2 oder 3, **dadurch gekennzeichnet, dass** eine Endkante (25) mit einem Auszugsprofil (27) versehen ist.

5. Fensterrollo nach einem der Ansprüche 1, 2 oder 3, **dadurch gekennzeichnet, dass** wenigstens eine Seitenkante (23,24) eine gerade Kante ist.

6. Fensterrollo nach Anspruch 4, **dadurch gekennzeichnet, dass** die Endkante (25) gerade ist oder sich aus geraden Abschnitten zusammensetzt.

7. Fensterrollo nach Anspruch 1, **dadurch gekennzeichnet, dass** der Rollobahnzuschnitt (22) aus einem in Wesentlichen undehnbaren Gewirk besteht.

8. Fensterrollo nach einem der Ansprüche 1, 2 oder 3, **dadurch gekennzeichnet, dass** der Wickelwelle (31) einer Antriebseinrichtung (32) zugeordnet ist.

9. Fensterrollo nach einem der Ansprüche 1 oder 2, **dadurch gekennzeichnet, dass** die Wickel (38) zylindrisch sind.

10. Fensterrollo nach Anspruch 3, **dadurch gekennzeichnet, dass** die Wickel (42) konisch sind.

11. Fensterrollo nach Anspruch 1, **dadurch gekennzeichnet, dass** die Wickel (36) in axialer Richtung voneinander beabstandet sind.

12. Fensterrollo nach einem der Ansprüche 1, 2 oder 3, **dadurch gekennzeichnet, dass** die Breite des verwendeten Bandes (37) zwischen 5 mm und 50 mm liegt, wobei jeder Zwischenwert als Grenze eines neuen Bereiches gilt.

13. Fensterrollo nach Anspruch 12, **dadurch gekennzeichnet, dass** das Band (37) ein selbstklebendes Band ist, das auf einer Flachseite mit einer klebfähigen Beschichtung ausgerüstet ist.

14. Fensterrollo nach Anspruch 12, **dadurch gekennzeichnet, dass** das Band (37) aus einem Träger, bestehend aus einem Textil oder einer Folie gebildet ist, das zueinander parallele Kanten aufweist.
